(19) **Europäisches Patentamt / European Patent Office / Office européen des brevets**

(11) **EP 3 807 617 B1**

(12) # FASCICULE DE BREVET EUROPEEN

(45) Date de publication et mention de la délivrance du brevet:
**07.06.2023 Bulletin 2023/23**

(21) Numéro de dépôt: **19737865.6**

(22) Date de dépôt: **14.06.2019**

(51) Classification Internationale des Brevets (IPC):
**G01N 15/04** *(2006.01)* **G01N 1/10** *(2006.01)*

(52) Classification Coopérative des Brevets (CPC):
**G01N 15/04; G01N 1/10;** G01N 2001/028;
G01N 2001/1018; G01N 2001/1445;
G01N 2001/4083; G01N 2015/0046

(86) Numéro de dépôt international:
**PCT/FR2019/051437**

(87) Numéro de publication internationale:
**WO 2019/239072 (19.12.2019 Gazette 2019/51)**

(54) **PROCEDE ET DISPOSITIF DE DETERMINATION DU COEFFICIENT ET DU POTENTIEL D'EMISSION DE PARTICULES D'UN MATERIAU, ET PROCEDE DE GESTION D'UNE VOIE DE CIRCULATION**

VERFAHREN UND VORRICHTUNG ZUR BESTIMMUNG DES TEILCHENEMISSIONSKOEFFIZIENTEN UND DES POTENTIALS EINES MATERIALS UND VERFAHREN ZUR STEUERUNG EINES STRÖMUNGSWEGES

METHOD AND DEVICE FOR DETERMINING THE PARTICLE EMISSION COEFFICIENT AND POTENTIAL OF A MATERIAL, AND METHOD FOR CONTROLLING A FLOW PATH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2018 FR 1855260**

(43) Date de publication de la demande:
**21.04.2021 Bulletin 2021/16**

(73) Titulaire: **Université Gustave Eiffel
77454 Marne-la-Vallée, Cedex 2 (FR)**

(72) Inventeurs:
• **SEDIKI, Ouardia
44230 Saint Sebastien sur Loire (FR)**
• **RAZAKAMANANTSOA, Andry R.
44360 Saint Etienne de Montluc (FR)**
• **RAYSSAC, Erwan
44830 Brains (FR)**
• **BODENES, Daniel
44115 Haute Goulaine (FR)**

(74) Mandataire: **Cabinet Beau de Loménie
158, rue de l'Université
75340 Paris Cedex 07 (FR)**

(56) Documents cités:
**WO-A1-2017/103402 US-A- 5 816 509**

• **J. F. KOK ET AL: "An improved dust emission model - Part 1: Model description and comparison against measurements", ATMOSPHERIC CHEMISTRY AND PHYSICS, vol. 14, no. 23, 9 décembre 2014 (2014-12-09), pages 13023-13041, XP055570071, DOI: 10.5194/acp-14-13023-2014**
• **Z. B. SHI ET AL: "Minor effect of physical size sorting on iron solubility of transported mineral dust", ATMOSPHERIC CHEMISTRY AND PHYSICS, vol. 11, no. 16, 19 août 2011 (2011-08-19) , pages 8459-8469, XP055570089, DOI: 10.5194/acp-11-8459-2011**

EP 3 807 617 B1

**Description**

DOMAINE TECHNOLOGIQUE

L'invention concerne les méthodes et dispositifs permettant d'optimiser la réponse apportée pour faire face aux émissions de particules, et plus précisément, aux émissions de particules se produisant lors du passage de véhicules sur des voies de circulation.

ARRIERE-PLAN TECHNOLOGIQUE

Sur les chantiers de terrassement, l'envol des poussières engendre des nuisances environnementales importantes sur et aux abords immédiats du site. Ces poussières sont générées principalement lors des passages de véhicules sur des pistes (ou voies de circulation) non revêtues. Le trafic entraîne des dépôts de poussière au voisinage du site ainsi qu'une atténuation de la visibilité.

Pour limiter ces nuisances, de manière connue on arrose périodiquement les pistes, et/ou on essaie d'espacer régulièrement les passages de véhicules, ou de limiter la masse unitaire des véhicules. Ces mesures permettent de limiter l'envol des poussières, mais entraînent un surcoût non négligeable pour le chantier.

WO 2017/103402 A1 divulgue un procédé de détermination d'une propriété d'un matériau, notamment un matériau constituant un sol, en matière de dégagement.

Actuellement, il n'existe pas de méthode ou de dispositif permettant de choisir de manière optimale les mesures prises pour limiter l'envol de poussières pendant un chantier. Par conséquent, il existe un besoin pour une méthode et pour un dispositif permettant d'optimiser l'arrosage des pistes, et/ou de réguler la circulation des véhicules sur celle-ci de manière à réduire autant que possible l'envol des poussières.

OBJET ET RESUME DE L'INVENTION

L'objectif de l'invention est atteint grâce aux dispositifs et aux méthodes décrites ci-dessous.

Les inventeurs ont fait apparaître qu'un paramètre intrinsèque du matériau, que l'on peut appeler coefficient d'émissions du matériau, peut être calculé et permet de caractériser efficacement la capacité du matériau à émettre des poussières. Ce paramètre est un indicateur de sensibilité à l'envol du matériau.

Le matériau pris en compte est naturellement le matériau constituant la voie de circulation, c'est-à-dire le matériau dont on cherche à réduire les émissions de poussières. Lorsqu'un tel matériau est sollicité mécaniquement par le passage de véhicules, par exemple des camions, il libère des poussières.

Le coefficient d'émissions de particules caractérise de manière générale, pour le matériau considéré, sa propension à émettre des particules lorsqu'il est sollicité par le passage de véhicules. (Dans ce document, les termes 'poussières' et 'particules' sont utilisés de manière interchangeable et ont le même sens).

De plus, ce paramètre peut être pondéré par le taux d'humidité relative (noté par la suite HR) de manière à obtenir la valeur d'un deuxième paramètre, nommé potentiel d'émission de particules du matériau, qui caractérise la propension du matériau à émettre des poussières, mais dans les conditions météorologiques à l'instant considéré, c'est-à-dire plus précisément, pour le taux d'humidité relative ambiant à l'instant et sur le site considérés.

Il est possible, sur la base de la valeur du potentiel d'émissions du matériau, d'optimiser la gestion de la circulation des camions du point de vue de l'envol des poussières : Il est possible, en fonction de la valeur ce paramètre, d'optimiser l'arrosage de la voie de circulation considérée, et/ou d'adapter la circulation des véhicules. L'adaptation de la circulation des véhicules peut comprendre notamment l'action de modifier la fréquence de passage des véhicules, de modifier leur niveau de chargement (et donc leur masse unitaire ou par essieu totale), etc.

On comprend que dans ce document, le terme 'véhicule' ne désigne pas ici un véhicule spécifique, mais désigne un type de véhicule, caractérisé par son modèle et éventuellement par son niveau de chargement.

Par conséquent, un premier aspect de l'invention concerne tout d'abord un procédé de détermination du coefficient d'émission de particules d'un matériau (noté CE).

Ce procédé comporte les étapes suivantes :

a) on prélève par tamisage une masse prédéterminée de fines d'un matériau ;

b) pour chacune parmi une pluralité de masses desdites fines, lesdites masses étant différentes les unes des autres, on réalise les opérations suivantes :

b1) on dispose une masse considérée desdites fines dans une enceinte ;

b2) en injectant un flux d'air rentrant dans l'enceinte, on provoque l'envol de particules à partir desdites fines et leur éjection hors de l'enceinte dans un flux d'air sortant ;

b3) on mesure, en fonction du temps, une visibilité et une concentration massique de particules dans le flux d'air sortant et on calcule, à partir desdites mesures, une concentration massique maximale des particules dans le flux d'air sortant, et une durée nécessaire pour qu'une visibilité redevienne égale à une visibilité avant le début de l'envol, appelée durée totale d'éjection des particules ;

c) on calcule des valeurs normalisées des concentrations massiques maximales de particules et des durées totales d'éjection des particules en divisant lesdites valeurs de concentration maximale de particules et de durée totale d'éjection des particules mesurées à l'étape b) respectivement par la valeur maximale de concentration maximale de particules et la valeur maximale de durée totale d'éjection des particules, la valeur maximale de concentration maximale de particules étant la plus grande valeur de concentration maximale de particules et la valeur maximale de durée d'éjection de particules étant la plus grande valeur de durée totale d'éjection des particules, pour l'ensemble des mesures réalisées à l'étape b);

d) à partir des valeurs normalisées de concentration maximale de particules et de durée totale d'éjection des particules, on calcule une pente d'une droite de tendance représentative de la fonction fournissant la concentration maximale normalisée de particules en fonction de la durée normalisée d'éjection des particules ;

e) on calcule le coefficient d'émission de particules du matériau CE comme étant égal à une valeur d'une fonction monotone (strictement croissante ou strictement décroissante) de la pente de la droite de tendance.

Différentes fonctions peuvent être utilisées pour exprimer le coefficient d'émission de particules du matériau. Par exemple, ce coefficient peut être égal à la pente de la droite de tendance.

Dans un autre mode de mise en oeuvre, le coefficient d'émission de particules du matériau est par exemple calculé en fonction de l'angle $\Theta$ formé entre la droite de tendance et l'axe des abscisses. Il peut par exemple être égal à cet angle, ou à la tangente de cet angle. Ainsi dans un mode de mise en oeuvre, à l'étape e) le coefficient d'émission de particules du matériau est calculé par la formule $CE = A \times \tan(\Theta)$, où A est un coefficient fixe.

Avantageusement, la mesure du coefficient d'émission de particules d'un matériau permet de rendre très facile le calcul sur site du potentiel d'émission de particules du matériau pour toutes les voies formées de ce matériau.

En effet, le potentiel d'émission de particules d'un matériau peut être déterminé en réalisant les opérations suivantes :

i) on mesure le taux d'humidité relative (HR) ;

ii) on calcule le potentiel d'émission de particules du matériau (PE) en fonction d'un rapport entre le coefficient d'émissions de particules du matériau (CE) et le taux d'humidité relative (HR).

Le potentiel d'émission peut donc être réalisé très simplement.

Ce procédé de détermination du potentiel d'émission de particules d'un matériau permet d'optimiser, avec des moyens de mesure très simples, le déplacement de véhicules sur les voies de circulation constituées de ce matériau, et cela de la manière suivante.

Selon un deuxième aspect de l'invention il est proposé un procédé de gestion d'une voie de circulation sur laquelle il est prévu de faire circuler des véhicules, suivant lequel :

A. on calcule le potentiel d'émission de particules d'un matériau de ladite voie de circulation en mettant en oeuvre le procédé de détermination du potentiel d'émission de particules d'un matériau tel que défini précédemment, de telle sorte que l'étape i) du procédé soit réalisée à proximité de la voie de circulation ;

B. on définit au moins une règle d'arrosage de la voie de circulation et/ou de circulation de véhicules sur la voie de circulation en fonction d'un écart entre la valeur du potentiel d'émission de particules du matériau (PE) déterminée à l'étape A et un seuil prédéterminé.

Pour permettre de déterminer le potentiel d'émission de particules d'un matériau, un troisième aspect de l'invention concerne un dispositif de détermination du coefficient d'émission de particules d'un matériau. Ce dispositif comporte :

une enceinte ;

un compresseur d'air, configuré de manière à pouvoir injecter un flux d'air rentrant dans l'enceinte ;

un visibilimètre et un compteur de particules, configurés de manière à pouvoir mesurer respectivement une visibilité et une concentration massique de particules dans un flux d'air sortant de l'enceinte ;

un calculateur configuré pour l'acquisition des mesures réalisées par le visibilimètre et le compteur de particules ;

le calculateur étant configuré pour :

i) à partir d'une série de mesures, en fonction du temps, de visibilité et de concentration massique de particules réalisées par le visibilimètre et le compteur de particules, calculer une concentration massique maximale des particules dans la série de mesures et une durée nécessaire pour qu'une visibilité redevienne égale à une visibilité avant le début de la série de mesures, appelée durée totale d'éjection des particules au vu de la série de mesures ;

ii) à partir des valeurs de concentration massique maximale des particules et de durée totale d'éjection des particules pour chaque série parmi une pluralité de séries de mesures de visibilité et de densité de particules, calculer des valeurs normalisées des concentrations massiques maximales des particules et des durées d'éjection des particules en divisant lesdites valeurs de concentration maximale de particules et de durée d'éjection des particules mesurées respectivement par la valeur maximale de concentration massique maximale de particules et la valeur maximale de durée d'éjection des particules, la valeur maximale de concentration maximale de particules étant la plus grande valeur de concentration maximale de particules et la valeur maximale de durée totale d'éjection de particules étant la plus grande valeur de durée totale d'éjection de particules, pour l'ensemble des séries de mesures de ladite pluralité de séries de mesures ;

iii) à partir des valeurs normalisées de concentration massique maximale de particules et de durée d'éjection des particules, calculer une pente d'une droite de tendance représentative de la fonction fournissant la concentration massique maximale de particules en fonction de la durée d'éjection des particules ;

iv) calculer le coefficient d'émission de particules du matériau comme étant égal à une valeur d'une fonction monotone de la pente de la droite de tendance .

Dans un mode de réalisation du dispositif, le calculateur est configuré de plus pour calculer le coefficient d'émission de particules par la formule CE = A x tan (Θ), où Θ est un angle entre la droite de tendance et l'axe des abscisses, et A est un coefficient fixe.

L'invention concerne enfin un dispositif de détermination du potentiel d'émission de particules d'un matériau, constitué par un dispositif de détermination du coefficient d'émission de particules d'un matériau tel que défini précédemment, ce dispositif comprenant en outre un appareil de mesure du taux d'humidité de l'air configuré de manière à pouvoir mesurer un taux d'humidité de l'air au voisinage de l'enceinte ; et dont le calculateur est configuré de plus pour calculer le potentiel d'émission de particules en fonction d'un rapport entre le coefficient d'émissions de particules du matériau et le taux d'humidité relative.

BREVE DESCRIPTION DES DESSINS

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :

-   la figure 1 est une vue schématique en perspective d'un dispositif de détermination du potentiel d'émission de particules d'un matériau conforme à l'invention ;
-   la figure 2 est une coupe schématique latérale partielle du dispositif représenté sur la Fig.1, centrée sur l'enceinte de ce dispositif ;
-   la figure 3 est un diagramme représentant les variations de concentration massique de particules au cours d'éjections de particules dans le dispositif représenté sur la Fig.1 ;
-   la figure 4 est un diagramme représentant les variations de visibilité au cours d'éjections de particules dans le dispositif représenté sur la Fig.1 ;
-   la figure 5 est un diagramme représentant les variations de concentration massique de particules en fonction de durées d'éjection des particules ;
-   la figure 6 est un diagramme-blocs présentant un mode de mise en oeuvre du procédé de détermination du coefficient d'émission de particules d'un matériau selon l'invention ; et
-   la figure 7 est un diagramme-blocs présentant un mode de mise en oeuvre du procédé de gestion d'une voie de circulation selon l'invention.

DESCRIPTION DETAILLEE DE L'INVENTION

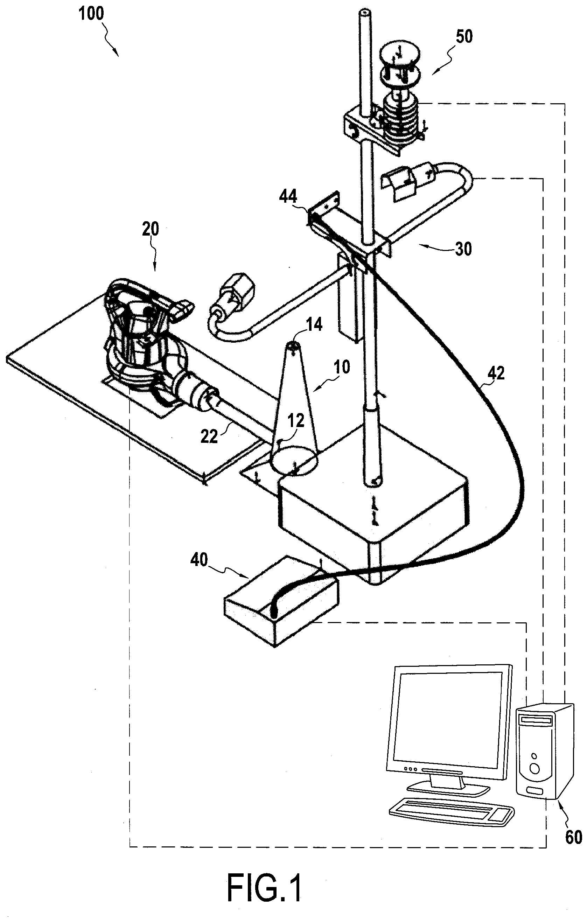

En faisant référence à la figure 1, un dispositif 100 de détermination du coefficient d'émission de particules d'un matériau (CE) va maintenant être décrit.

Le dispositif 100 de détermination du potentiel d'émission de particules d'un matériau comporte principalement une enceinte 10, un compresseur d'air 20, un visibilimètre 30, un compteur de particules 40, et un calculateur 50. Dans le cas présent, le dispositif 100 constitue également un dispositif de détermination du potentiel d'émission de particules d'un matériau, et dans ce but comporte également une station météorologique 50.

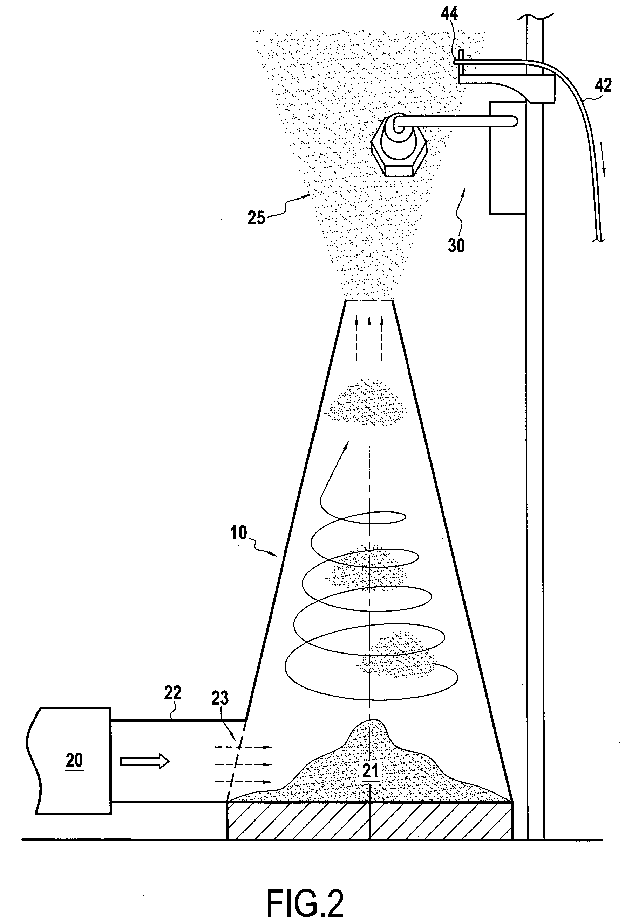

L'enceinte 10 est constituée essentiellement par un cône tronqué creux, présentant une ouverture 12 en partie inférieure et une ouverture supérieure 14, et sera décrite plus en détail en relation avec la Fig.2. L'orifice de refoulement du compresseur d'air 20 est relié par un tube 22 à l'ouverture 12 aménagée en partie inférieure du cône 10.

Lorsque l'on place une masse 21 de matériau susceptible de dégager des particules dans le cône, et que l'on actionne le compresseur d'air 20, celui-ci injecte un flux d'air rentrant 23 dans le cône 10. Ce flux d'air 23 rentrant traverse le cône 10 en soulevant les particules libérées par le matériau préalablement placé dans le cône, et est éjecté hors du cône 10 via l'ouverture 14, ce qui forme un flux d'air sortant 25.

Le compresseur 20 et l'enceinte 10 doivent de préférence être dimensionnés et agencés de telle sorte que lors d'une éjection de particules, la vitesse du flux d'air sortant 25 soit supérieure à celle du vent ; que le nombre de Reynolds de l'écoulement soit supérieur à 2000 ; et bien sûr, que la vitesse du courant d'air à l'intérieur de l'enceinte 10 soit suffisante pour soulever les particules que le matériau est susceptible de libérer.

Le visibilimètre 30 est un appareil apte à mesurer la Portée Optique Météorologique (POM), paramètre qui quantifie la visibilité.

Le visibilimètre 30 est placé à faible distance (environ 500 mm) au-dessus de la sortie du cône 10, de telle sorte que la zone de mesure du visibilimètre se situe dans le flux d'air 25 sortant du cône 10.

Le compteur de particules 40 est un appareil apte à mesurer la concentration massique (PM_max) de particules (en μg/m3). La concentration massique peut être mesurée pour l'ensemble des diamètres de particules, ou seulement pour certaines plages de valeurs de diamètre. Par exemple, dans le mode de réalisation présenté, le compteur de particules utilisé permet de mesurer la concentration massique de particules de tailles comprises entre 0,18 et 18 μm (micromètres).

La concentration massique des particules est également mesurée dans le flux d'air 25 sortant du cône 10.

De manière optionnelle, le compteur de particules 40 peut aussi permettre de mesurer la densité de particules (en Particules/cm$^3$), ainsi que leur distribution granulométrique.

Pour pouvoir réaliser sa fonction, le compteur de particules 40 est équipé d'un tube en caoutchouc antistatique 42 de faible section. L'orifice d'aspiration 44 de ce tube est placé à faible distance au-dessus de l'orifice supérieur 14 du cône 10, dans le flux d'air sortant rejeté par le cône 10 (lors de la mise en oeuvre du procédé), pour aspirer les poussières rejetées par celui-ci. L'orifice d'aspiration 44 du tube d'aspiration est donc placé dans ou à proximité de la zone de mesure du visibilimètre.

La station météorologique 50 est un appareil de mesure (optionnel dans l'invention) apte à mesurer l'humidité relative de l'air, la température de l'air, la pression atmosphérique, la vitesse du vent ainsi que sa direction. Elle est placée de telle sorte que les mesures qu'elle réalise ne soient pas affectées par le flux d'air 25 sortant du cône 10.

Le calculateur 60 est un ordinateur (ou plus généralement, un système de calcul. Tout système apte à réaliser des traitements de données sur les données acquises par les différents capteurs du dispositif 100 peut être utilisé comme calculateur au sens de l'invention). L'ordinateur 60 est configuré pour piloter les différents appareils de mesure auxquels il est relié : le visibilimètre 30, le compteur de particules 40 et la station météorologique 50, de manière à pouvoir acquérir les mesures correspondantes à des instants prédéterminés. L'ordinateur 60 comporte une mémoire dans laquelle est enregistré un programme permettant de calculer le taux d'émission d'un matériau PE conformément à l'invention.

La détermination du coefficient d'émission de particules CE d'un matériau à l'aide du dispositif 100 se fait de la manière suivante :

a) on prélève une certaine quantité du matériau dont on veut évaluer la propension à émettre des particules. On extrait alors par tamisage une certaine quantité de fines. Par exemple, on peut extraire les fines de diamètre maximal 2 millimètres.

b) ensuite, on prépare plusieurs masses de fines (des masses différentes les unes des autres) afin de réaliser successivement plusieurs séries de mesures. Par exemple, on peut préparer une masse de 50 g de fines, une masse de 100 g de fines, et une masse de 200 g de fines.

Pour chacune de ces masses de fines, on réalise alors les opérations suivantes :

b1) on dispose la masse de fines considérée dans le cône 10 (par exemple, la masse 21, Fig.2) ;
b2) on active le compresseur d'air 20. Le compresseur d'air 20 injecte alors via le tube 22 un courant d'air 23 rentrant dans le cône 10, ce qui provoque l'envol de particules à partir de la masse de fines 21 placée dans le cône. La forme du cône et la vitesse du courant d'air sont choisies de telle sorte que la circulation d'air dans le cône se fasse en régime turbulent. Pour l'enceinte 10, d'autres formes qu'un cône peuvent éventuellement être utilisées.

Sous l'effet de ce courant d'air, le cône rejette alors par son orifice 14 un flux d'air sortant 25, chargé de particules.

b3) pendant une période qui commence légèrement avant l'activation du compresseur 10 et qui s'étend jusqu'à ce que le flux d'air sortant 25 ne contienne quasiment plus de particules (l'ensemble des particules de la masse de fines 21 ayant été éjectées), on acquiert des mesures à l'aide du visibilimètre 30 et du compteur de particules 40. En parallèle, on acquiert les différentes mesures que permet de réaliser la station météorologique 50. Ces mesures sont acquises par le calculateur 60.

Dans l'exemple proposé, on réalise trois séries de mesures, respectivement pour les masses de fines 21 de 50g, 100g et 200g.

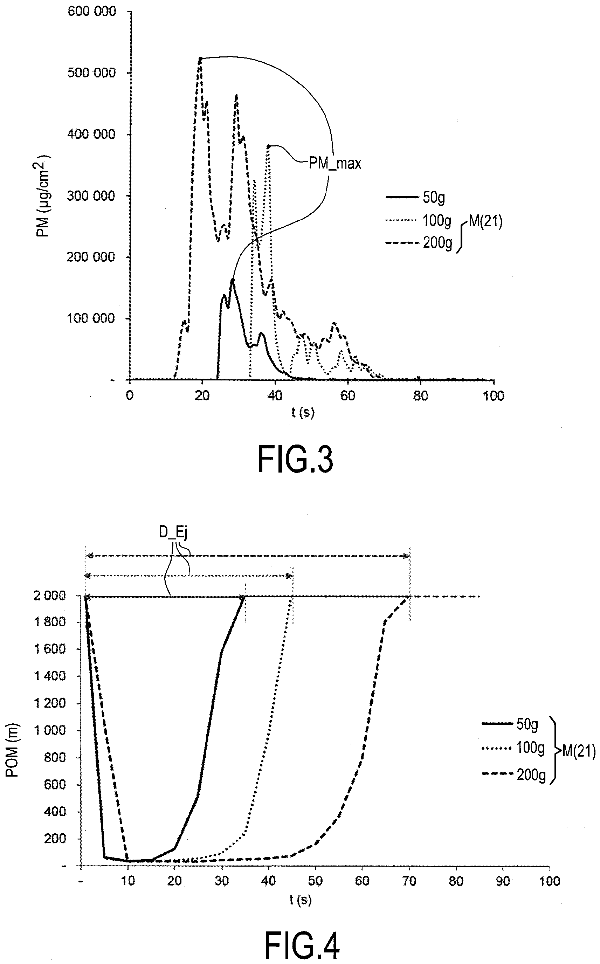

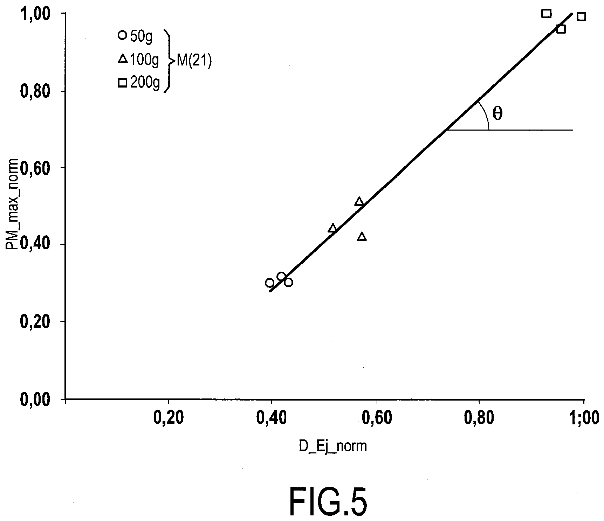

Les mesures de concentration massique de particules PM_max acquises par le compteur de particules 40 au cours de ces trois séries de mesures sont représentées sur la figure 4, alors que les mesures de visibilité acquises par le visibilimètre 30, également au cours des trois séries de mesures, sont représentées sur la figure 5.

Chaque série de mesures correspond à une suite de valeurs mesurées lorsque l'on provoque un envol de particules à l'étape b2) à partir d'une masse de fines préalablement disposée dans le cône à l'étape b1).

Pour chaque série de mesures, la figure 4 comporte une courbe qui indique l'évolution de la concentration totale de particules PM_max (en μg/m3) en fonction du temps t (exprimé en secondes).

Chaque courbe comporte un maximum : celui-ci indique la concentration massique maximale PM_max des particules au cours de la série de mesures considérée.

Pour chaque série de mesures, la figure 5 comporte une courbe qui indique l'évolution de la portée optique météorologique POM (en m) en fonction du temps t (exprimé en secondes).

Pour chaque courbe, on détermine la durée nécessaire pour que la visibilité redevienne égale à la visibilité avant le début de l'envol ; cette durée est appelée 'durée d'éjection des particules'.

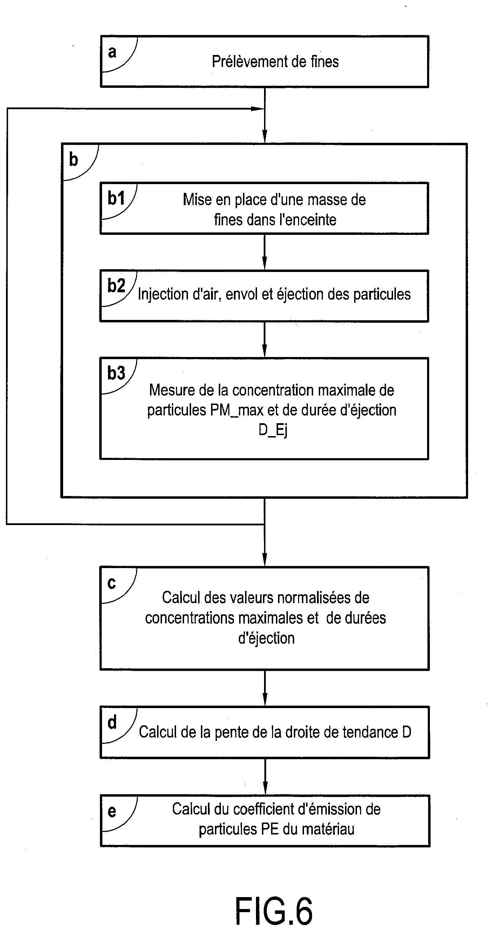

c) on calcule alors des valeurs normalisées PM_max_norm et D_Ej_norm des concentration maximale de particules et des durée d'éjection des particules acquises à l'étape b) en divisant les valeurs de concentration maximale de particules et de durée d'éjection des particules mesurées respectivement par la valeur maximale de concentration maximale de particules et la valeur maximale de durée d'éjection de particules. La valeur maximale de concentration maximale de particules est la plus grande valeur de concentration maximale de particules, pour l'ensemble des séries de mesure réalisées (trois séries dans le cas présent). La valeur maximale de durée d'éjection de particules est la plus grande valeur de durée d'éjection des particules, pour l'ensemble des séries de mesure réalisées.
d) A partir des valeurs normalisées de concentration maximale de particules et de durée d'éjection des particules, on calcule alors une droite de tendance D représentative de la fonction fournissant la concentration maximale de particules (PM_max) en fonction de la durée d'éjection des particules (D_Ej). Cette droite D est représentée sur la figure 6.
e) On calcule le coefficient d'émission de particules CE du matériau en fonction d'une pente de la droite de tendance. Dans le cas présent, ce coefficient est calculé par la formule suivant : CE = tan (Θ).

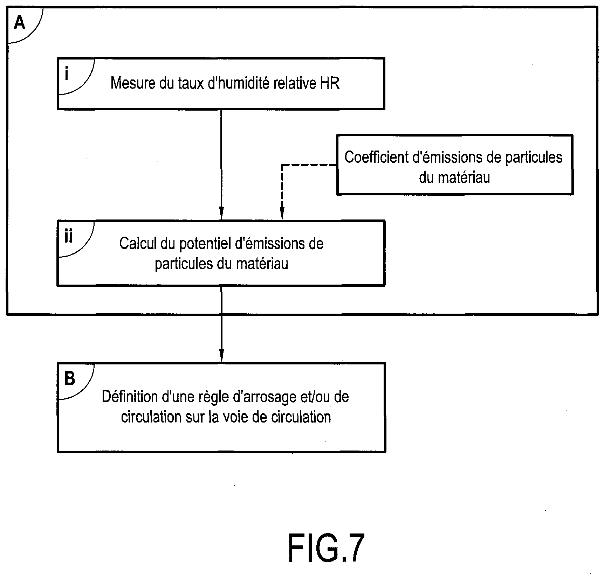

Une fois le coefficient d'émission de particules CE du matériau calculé, le potentiel d'émission de particules CE du matériau dans des conditions données, c'est-à-dire pour un taux d'humidité relative donné, peut être simplement calculé de la manière suivante (Fig.7) :

i) on mesure le taux d'humidité relative (HR) ;
ii) on calcule le potentiel d'émission de particules du matériau PE en fonction d'un rapport entre le coefficient d'émissions de particules du matériau CE et le taux d'humidité relative HR.

Dans l'exemple proposé, le potentiel d'émissions PE est calculé comme étant égal à :

$$PE = \tan(\Theta)/HR.$$

Le potentiel d'émission PE peut être exploité pour optimiser la gestion du sol, par exemple du sol d'une voie de circulation.

Dans ce but, il faut constituer préalablement une table comportant un ou plusieurs seuils pour le potentiel d'émission et indiquant, en fonction de la valeur du potentiel d'émission par rapport à ce ou ces seuils, quelle attitude il convient d'adopter.

Dans ce but, de manière préalable, on réalise un certain nombre de mesures du potentiel d'émission de particules PE du matériau de la voie de circulation considérée en mettant en oeuvre le procédé de détermination du potentiel d'émission de particules d'un matériau présenté précédemment, en veillant à ce que l'étape d'acquisition de mesures du procédé (étape i)) soit réalisée à proximité de la voie de circulation considérée. Ces différentes mesures sont réalisées pour différentes conditions météorologiques, et notamment différentes valeurs du taux d'humidité relative de l'air.

Pour chacune de ces mesures, on détermine de manière empirique la règle d'arrosage de la voie de circulation et/ou de circulation de véhicules sur la voie de circulation qui est adaptée. Par exemple, on peut déterminer que dans une certaine circonstance, il est nécessaire d'arroser la voie de circulation, en précisant éventuellement le débit d'arrosage, et/ou sa durée, et/ou la présence d'additif de stabilisation des poussières dans l'eau d'arrosage.

La réalisation de ces différentes mesures permet de déterminer un ou plusieurs seuils à partir desquels une règle d'arrosage de la voie de circulation et/ou de circulation de véhicules sur la voie de circulation doit être appliquée.

Le but est de définir des seuils à partir desquels des actions préventives du chantier en temps réel seront déclenchées en fonction du potentiel d'émission PE mesuré sur site. Le PE se définit comme le résultat de la corrélation entre la pente de la droite de tendance et l'humidité relative instantané de l'air HR.

Plus en détail, dans le mode de mise en oeuvre présenté, la détermination des valeurs des seuils se déroule de la manière suivante :
On réalise l'étape (1) ci-dessous plusieurs fois, pour différents taux d'humidité relative (par exemple, au petit matin, à midi, le soir,..).

1. Etablissement d'une table de plages de visibilité, pour un taux d'humidité relative donné

On place une masse de fines dans l'enceinte 10 du dispositif 100, et on actionne le compresseur 20 de manière à provoquer l'envol des particules (comme dans les étapes b1) et b2) indiquées précédemment et leur éjection progressive hors de l'enceinte 10.

Pendant l'éjection des particules, un observateur (défini plus loin) étudie les variations de visibilité dans le flux sortant 25 ; à partir de cette observation, il définit des valeurs-seuils de visibilité lors de l'envol des particules. Pour cela en général, on fixe préalablement une cible (visuelle) de l'autre côté du flux d'air sortant 25 par rapport à l'observateur. Celui-ci qualifie la visibilité de la cible en attribuant des qualificatifs ou notes (« parfaite », « moyenne », « mauvaise », ...) correspondant à la visibilité de la cible telle que perçue par l'observateur. Pendant l'éjection des particules, l'observateur et la cible doivent être placés à une distance suffisante du flux d'air sortant 25 pour ne pas influencer celui-ci. Le terme observateur peut désigner une ou plusieurs personne(s) et/ou un système de prise de vue (caméra ou appareil photo) couplé à des moyens de calcul.

Cette étape s'achève par l'établissement d'une table comprenant une ou plusieurs valeurs-seuils de visibilité, définissant différentes plages de valeurs de visibilité, un même qualificatif ou une même note s'appliquant à toute la plage de valeurs.

Cette table est valable pour le taux d'humidité relative au moment des mesures.

Une analyse statistique simple peut éventuellement être nécessaire pour déterminer les valeurs seuils de visibilité lorsqu'on a affaire à des observateurs humains. Dans le cas d'un système de prise de vue, une analyse de l'évolution de la netteté suffit pour déterminer les seuils. Les deux méthodes d'analyse peuvent être combinées pour affiner la détermination des valeurs-seuils de visibilité.

Chaque fois que l'étape (1) ci-dessus est réalisée, on détermine les actions de gestion de la voie de circulation qu'il convient de prendre au moment de la mesure, compte tenu de l'état du matériau de la voie de circulation (ces actions sont déterminées en consultant des spécialistes de chantiers, habitués à déterminer quelles mesures il convient de prendre pour des chantiers (ou des voies de circulation) dont le sol est constitué du matériau considéré).

On calcule par ailleurs, par exemple à l'aide du dispositif 100, le coefficient d'émission de particules du matériau CE, pour le matériau de la voie de circulation considérée.

On en déduit les valeurs du potentiel d'émission de particules du matériau PE, pour le matériau de la voie de circulation considérée, pour les différents taux d'humidité relative auxquels les différentes étapes (1) ont été réalisées.

On crée alors une table, dite table « Potentiels/Règles » indiquant, pour chaque plage parmi différentes plages de valeurs du potentiel d'émission de particules du matériau, quelle(s) règle(s) d'arrosage de la voie de circulation et/ou de circulation de véhicules il convient d'adopter pour la voie de circulation, pour la plage considérée. Les différentes plages de valeurs du potentiel d'émission de particules du matériau sont séparées les unes des autres par des valeurs-seuils.

Une fois cette table établie, le procédé de gestion de la voie de circulation peut être mis en oeuvre en utilisant ces informations.

Dans ce but (Fig.7), au cours de la première étape A, on calcule le potentiel d'émission de particules PE du matériau de la voie de circulation considérée en mettant en oeuvre le procédé de détermination du potentiel d'émission de particules d'un matériau présenté précédemment.

Ensuite, au cours d'une étape B, on compare le potentiel d'émission de particules PE du matériau de la voie de circulation considérée ainsi mesuré à la table « Potentiels/Règles », et on définit la ou les règles d'arrosage de la voie de circulation et/ou de circulation de véhicules sur la voie de circulation qui sont les plus adaptées, en comparant la valeur du potentiel d'émission de particules du matériau (PE) déterminée à l'étape A au(x) seuil(s) prédéterminé(s) indiqués dans la table « Potentiels/Règles ».

Quoique la présente invention ait été décrite en se référant à des exemples de réalisation spécifiques, il est évident que des différentes modifications et changements peuvent être effectués sur ces exemples sans sortir de la portée définie par les revendications. Par conséquent, la description et les dessins doivent être considérés dans un sens illustratif plutôt que restrictif.

**Revendications**

1. Procédé de détermination du coefficient d'émission de particules d'un matériau (CE), comportant les étapes suivantes :

   a) on prélève par tamisage une masse prédéterminée de fines (21) d'un matériau ;
   b) pour chacune parmi une pluralité de masses desdites fines, lesdites masses étant différentes les unes des autres, on réalise les opérations suivantes :

   b1) on dispose une masse considérée desdites fines dans une enceinte (10) ;
   b2) en injectant un flux d'air (23) rentrant dans l'enceinte (10), on provoque l'envol de particules à partir desdites fines et leur éjection hors de l'enceinte dans un flux d'air sortant (25);
   b3) on mesure, en fonction du temps, une visibilité et une concentration massique de particules dans le flux d'air sortant et on calcule, à partir desdites mesures, une concentration massique maximale (PM_max) des particules dans le flux d'air sortant, et une durée nécessaire pour qu'une visibilité redevienne égale à une visibilité avant le début de l'envol, appelée durée totale d'éjection des particules ;

   c) on calcule des valeurs normalisées (PM_max_norm) des concentrations massiques maximales de particules et des durées totales d'éjection des particules (D_Ej_norm) en divisant lesdites valeurs de concentration maximale de particules et de durée totale d'éjection des particules mesurées à l'étape b) respectivement par la valeur maximale de concentration maximale de particules et la valeur maximale de durée totale d'éjection des particules, la valeur maximale de concentration maximale de particules étant la plus grande valeur de concentration maximale de particules et la valeur maximale de durée totale d'éjection de particules étant la plus grande valeur de durée totale d'éjection des particules, pour l'ensemble des mesures réalisées à l'étape b) ;

d) à partir des valeurs normalisées (PM_max_norm, D_Ej_norm) de concentration maximale de particules et de durée totale d'éjection des particules, on calcule une pente d'une droite de tendance (D) représentative de la fonction fournissant la concentration maximale normalisée de particules (PM_max_norm) en fonction de la durée normalisée d'éjection des particules (D_Ej_norm) ;

e) on calcule le coefficient d'émission de particules du matériau (CE) comme étant égal à une valeur d'une fonction monotone de la pente de la droite de tendance (D).

**2.** Procédé de détermination du coefficient d'émission de particules d'un matériau (CE) selon la revendication 1, dans lequel à l'étape e), le coefficient d'émission de particules du matériau (CE) est calculé par la formule CE = A x tan (Θ), où Θ est un angle entre la droite de tendance et l'axe des abscisses, et A est un coefficient fixe.

**3.** Procédé de détermination du potentiel d'émission de particules d'un matériau (PE) selon la revendication 1 ou 2, dans lequel comprenant les étapes suivantes :

    i) on mesure un taux d'humidité relative (HR) ;
    ii) on calcule le potentiel d'émission de particules du matériau (PE) en fonction d'un rapport entre le coefficient d'émissions de particules du matériau (CE) et le taux d'humidité relative (HR).

**4.** Procédé de gestion d'une voie de circulation sur laquelle il est prévu de faire circuler des véhicules, suivant lequel :

    A. on calcule le potentiel d'émission de particules d'un matériau de ladite voie de circulation en mettant en oeuvre le procédé de détermination du potentiel d'émission de particules d'un matériau selon la revendication 3, de telle sorte que l'étape i) du procédé soit réalisée à proximité de la voie de circulation ;
    B. on définit au moins une règle d'arrosage de la voie de circulation et/ou de circulation de véhicules sur la voie de circulation en comparant la valeur du potentiel d'émission de particules du matériau (PE) à au moins un seuil prédéterminé.

**5.** Dispositif (100) de détermination du coefficient d'émission de particules d'un matériau (CE), comportant :

    une enceinte (10) ;
    un compresseur d'air (20), configuré de manière à pouvoir injecter un flux d'air (23) rentrant dans l'enceinte (10) ;
    un visibilimètre (30) et un compteur de particules (40), configurés de manière à pouvoir mesurer respectivement une visibilité (POM) et une concentration massique de particules (PM_max) dans un flux d'air (25) sortant de l'enceinte (10) ;
    un calculateur (60) configuré pour l'acquisition des mesures réalisées par le visibilimètre (30) et le compteur de particules (40);
    le calculateur (60) étant configuré pour :

      i) à partir d'une série de mesures, en fonction du temps, de visibilité et de concentration massique de particules réalisées par le visibilimètre (30) et le compteur de particules (40) calculer une concentration massique maximale (PM_max) des particules dans la série de mesures et une durée nécessaire pour qu'une visibilité redevienne égale à une visibilité avant le début de la série de mesures, appelée durée totale d'éjection (D_Ej) des particules au vu de la série de mesures ;
      ii) à partir des valeurs de concentration massique maximale des particules (PM_max) et de durée totale d'éjection (D_Ej) des particules pour chaque série parmi une pluralité de séries de mesures de visibilité et de densité de particules, calculer des valeurs normalisées (PM_max_norm,D_Ej_norm) des concentrations massiques maximales des particules et des durées d'éjection des particules en divisant lesdites valeurs (PM_max, D_Ej) de concentration maximale de particules et de durée d'éjection des particules mesurées respectivement par la valeur maximale de concentration massique maximale de particules et la valeur maximale de durée d'éjection des particules, la valeur maximale de concentration maximale de particules étant la plus grande valeur de concentration maximale de particules et la valeur maximale de durée totale d'éjection de particules étant la plus grande valeur de durée totale d'éjection de particules, pour l'ensemble des séries de mesures de ladite pluralité de séries de mesures ;
      iii) à partir des valeurs normalisées (PM_max_norm,D_Ej_norm) de concentration massique maximale de particules et de durée d'éjection des particules, calculer une pente d'une droite de tendance (D) représentative de la fonction fournissant la concentration massique maximale de particules (PM_max) en fonction de la durée d'éjection des particules (D_Ej) ;
iv) calculer le coefficient d'émission de particules du matériau (CE) comme étant égal à une valeur d'une fonction monotone de la pente de la droite de tendance (D).

6. Dispositif (100) de détermination du coefficient d'émission de particules d'un matériau (CE) selon la revendication 5, dont le calculateur (60) est configuré de plus pour calculer le coefficient d'émission de particules (CE) par la formule CE = A x tan (Θ), où Θ est un angle entre la droite de tendance et l'axe des abscisses, et A est un coefficient fixe.

7. Dispositif (100) de détermination du potentiel d'émission de particules d'un matériau (PE), constitué par un dispositif (100) de détermination du coefficient d'émission de particules d'un matériau selon la revendication 5 ou 6 comprenant en outre un appareil de mesure (50) du taux d'humidité de l'air configuré de manière à pouvoir mesurer un taux d'humidité de l'air (HR) au voisinage de l'enceinte ; et dont le calculateur (60) est configuré de plus pour calculer le potentiel d'émission de particules (PE) en fonction d'un rapport entre le coefficient d'émissions de particules du matériau (CE) et le taux d'humidité relative (HR).

**Patentansprüche**

1. Verfahren zur Bestimmung des Partikelemissionskoeffizienten eines Materials (CE), umfassend die folgenden Schritte:

a) eine vorbestimmte Masse an Feinstoffen (21) eines Materials wird durch Sieben entnommen,
b) für eine jede einer Vielzahl von Massen der Feinstoffe, wobei die Massen voneinander verschieden sind, werden die folgenden Arbeitsschritte durchgeführt

b1) eine betrachtete Masse der Feinstoffe wird in einem Gehäuse (10) angeordnet,
b2) durch Einblasen eines Luftstroms (23), der in das Gehäuse (10) eintritt, wird bewirkt, dass sich die Partikel von den Feinstoffen lösen und in einem austretenden Luftstrom (25) aus dem Gehäuse ausgestoßen werden;
b3) es wird eine Sichtweite und eine Massenkonzentration von Partikeln in dem austretenden Luftstrom in Abhängigkeit von der Zeit gemessen, und anhand der Messungen wird eine maximale Massenkonzentration (PM_max) der Partikel in dem austretenden Luftstrom sowie eine Zeitdauer, die erforderlich ist, damit eine Sicht wieder gleich einer Sicht vor Beginn des Ablösens wird, als Gesamtpartikelausstoßzeitdauer (D_Ej) bezeichnet, berechnet,

c) es werden normalisierte Werte (PM_max_norm) der maximalen Massenkonzentrationen von Partikeln und der Gesamtzeitdauern des Partikelausstoßes (D_Ej_norm) berechnet, indem die Werte der maximalen Partikelkonzentration und der Gesamtdauer des Partikelausstoßes, welche in Schritt b) gemessen wurden, durch den Maximalwert der maximalen Partikelkonzentration bzw. den Maximalwert der Gesamtzeitdauer des Partikelausstoßes dividiert werden, wobei der Maximalwert der maximalen Partikelkonzentration der größte Wert der maximalen Partikelkonzentration ist und der Maximalwert der Gesamtzeitdauer des Partikelausstoßes der größte Wert der Gesamtzeitdauer des Partikelausstoßes für alle der in Schritt b) durchgeführten Messungen ist,
d) aus den normalisierten Werten (PM_max_norm, D_Ej_norm) der maximalen Partikelkonzentration und der Gesamtzeitdauer des Partikelausstoßes eine Steigung einer Trendlinie (D) berechnet wird, die für die Funktion repräsentativ ist, welche die normalisierte maximale Partikelkonzentration (PM_max_norm) in Abhängigkeit von der normalisierten Zeitdauer des Partikelausstoßes (D_Ej_norm) liefert,
e) der Partikelemissionskoeffizient des Materials (CE) wird als gleich einem Wert einer monotonen Funktion der Steigung der Trendlinie (D) berechnet.

2. Verfahren zur Bestimmung des Partikelemissionskoeffizienten eines Materials (CE) nach Anspruch 1, bei dem in Schritt e) der Partikelemissionskoeffizient des Materials (CE) durch die Formel CE = A x tan (8) berechnet wird, wobei Θ ein Winkel zwischen der Trendlinie und der Abszissenachse ist und A ein fester Koeffizient ist.

3. Verfahren zur Bestimmung des Partikelemissionspotentials eines Materials (PE) nach Anspruch 1 oder 2, umfassend die folgenden Schritte:

i) es wird ein Gehalt an relativer Feuchtigkeit (RF) gemessen,
ii) das Partikelemissionspotential des Materials (PE) wird in Abhängigkeit eines Verhältnisses zwischen dem Partikelemissionskoeffizienten des Materials (CE) und dem Gehalt an relativer Feuchtigkeit (RF) berechnet.

4. Verfahren zur Steuerung eines Verkehrsweges, auf dem Fahrzeuge verkehren sollen, wonach:

A. das Partikelemissionspotential eines Materials des Verkehrsweges durch Durchführen des Verfahrens zur Bestimmung des Partikelemissionspotentials eines Materials nach Anspruch 3 berechnet wird, derart, dass der Schritt i) des Verfahrens in der Nähe des Verkehrsweges durchgeführt wird,

B. es wird wenigstens eine Regel zum Beregnen des Verkehrsweges und/oder für das Verkehren von Fahrzeugen auf dem Verkehrsweg dadurch definiert, dass der Wert des Partikelemissionspotentials des Materials (PE) mit wenigstens einem vorbestimmten Schwellwert verglichen wird.

5. Vorrichtung (100) zur Bestimmung des Partikelemissionskoeffizienten eines Materials (CE), umfassend:

ein Gehäuse (10),
einen Luftkompressor (20), der so ausgelegt ist, dass er einen Luftstrom (23) einblasen kann, der in das Gehäuse (10) eintritt,
einen Sichtmesser (30) und einen Partikelzähler (40), die so ausgelegt sind, dass sie eine Sicht (POM) bzw. eine Massenkonzentration von Partikeln (PM_max) in einem Luftstrom (25), der aus dem Gehäuse (10) austritt, messen können,
einen Rechner (60), der für die Erfassung der von dem Sichtmesser (30) und dem Partikelzähler (40) durchgeführten Messungen ausgelegt ist,
wobei der Rechner (60) dazu ausgelegt ist:

i) aus einer Reihe von Messungen der Sichtweite und der Massenkonzentration von Partikeln in Abhängigkeit von der Zeit, die von dem Sichtmesser (30) und dem Partikelzähler (40) durchgeführt werden, eine maximale Massenkonzentration (PM_max) der Partikel in der Reihe von Messungen und eine Zeitdauer, die erforderlich ist, damit eine Sicht wieder gleich einer Sicht vor Beginn der Reihe von Messungen wird, als Gesamtzeitdauer des Partikelausstoßes (D_Ej) angesichts der Reihe von Messungen bezeichnet, zu berechnen,
ii) anhand der Werte der maximalen Massenkonzentrationen der Partikel (PM_max) und der Gesamtzeitdauer des Partikelausstoßes (D_Ej) für jede Reihe aus einer Vielzahl von Reihen von Messungen der Sicht und der Partikeldichte normalisierte Werte (PM_max_norm, D_Ej_norm) der maximalen Massenkonzentrationen der Partikel und der Zeitdauern des Partikelausstoßes dadurch zu berechnen, dass die gemessenen Werte (PM_max, D_Ej) der maximalen Partikelkonzentration und der Partikelausstoßzeitdauer durch den Maximalwert der maximalen Partikelmassenkonzentration bzw. den Maximalwert der Zeitdauer des Partikelausstoßes dividiert werden, wobei der Maximalwert der maximalen Partikelkonzentration der größte Wert der maximalen Partikelkonzentration ist und der Maximalwert der Gesamtzeitdauer des Partikelausstoßes der größte Wert der Gesamtzeitdauer des Partikelausstoßes für alle der Messreihen der Vielzahl von Messreihen ist,
iii) aus den normalisierten Werten (PM_max_norm, D_Ej_norm) der maximalen Partikelmassenkonzentration und der Zeitdauer des Partikelausstoßes eine Steigung einer Trendlinie (D) zu berechnen, die für die Funktion repräsentativ ist, welche die maximale Partikelmassenkonzentration (PM_max) in Abhängigkeit von der Zeitdauer des Partikelausstoßes (D_Ej) liefert,
iv) den Partikelemissionskoeffizienten des Materials (CE) als gleich einem Wert einer monotonen Funktion der Steigung der Trendlinie (D) zu berechnen.

6. Vorrichtung (100) zur Bestimmung des Partikelemissionskoeffizienten eines Materials (CE) nach Anspruch 5, deren Rechner (60) außerdem dazu ausgelegt ist, den Partikelemissionskoeffizienten (CE) durch die Formel CE = A x tan (ϴ) zu berechnen, wobei ϴ ein Winkel zwischen der Trendlinie und der Abszissenachse ist und A ein fester Koeffizient ist.

7. Vorrichtung (100) zur Bestimmung des Partikelemissionspotentials eines Materials (PE), bestehend aus einer Vorrichtung (100) zur Bestimmung des Partikelemissionskoeffizienten eines Materials nach Anspruch 5 oder 6, ferner umfassend ein Gerät zum Messen (50) des Gehalts an Luftfeuchtigkeit, das so ausgelegt ist, dass es einen Gehalt an Luftfeuchtigkeit (RF) in der Nähe des Gehäuses messen kann, und deren Rechner (60) ferner dazu ausgelegt, das Partikelemissionspotential (PE) in Abhängigkeit von einem Verhältnis zwischen dem Partikelemissionskoeffizienten des Materials (CE) und dem Gehalt an relativer Feuchtigkeit (RF) zu berechnen.

**Claims**

1. A method for determining the particle emission coefficient of a material (CE), including the following steps:

a) collecting by sieving a predetermined mass of fines of a material;

b) for each among a plurality of masses of said fines, said masses being different from each other, carrying out the following operations:

b1) disposing a considered mass of said fines in an enclosure (10);

b2) causing, by injecting an incoming air flow into the enclosure (10), particles to be airborne from said fines and to be ejected out of the enclosure in an outgoing air flow;

b3) measuring, as a function of time, a visibility and a particle mass concentration in the outgoing air flow and calculating, from said measurements, a maximum particle mass concentration (PM_max) in the outgoing air flow, and a time necessary for the visibility to become equal to a visibility before the particles become airborne, called total particle ejection time (D_Ej);

c) calculating normalized values (PM_max_norm) of the maximum particle mass concentrations and of the total particle ejection times (D_Ej_norm) by dividing said values of maximum particle concentration and of total particle ejection time that are measured in step b) respectively by the maximum value of maximum particle concentration and the maximum value of total particle ejection time, the maximum value of maximum particle concentration being the largest value of maximum particle concentration and the maximum value of total particle ejection time being the largest value of total particle ejection time, for all the series of measurement that are made at step b);

d) calculating, from the normalized values (PM_max_norm, D_Ej_norm) of maximum particle concentration and of total particle ejection time, a slope of a trend-line (D) representative of the function providing the normalized maximum particle concentration (PM_max_norm) as a function of the normalized particle ejection time (D_Ej_norm);

e) calculating the particle emission coefficient of the material (CE) as being equal to a value of a monotonic function of the slope of the trend-line (D).

2. The method for determining the particle emission coefficient of a material (CE) according to claim 1, wherein in step e) the particle emission coefficient of the material (CE) is calculated by the formula $CE = A \times \tan(\Theta)$, where $\Theta$ is an angle between the trend-line and the abscissa axis, and A is a fixed coefficient.

3. The method for determining the particle emission potential of a material (PE) according to claim 1 or 2, comprising the following steps:

i) measuring a relative humidity rate (RH);

ii) calculating the particle emission potential of the material (PE) as a function of a ratio between the particle emission coefficient of the material (CE) and the relative humidity rate (HR).

4. A method for managing a traffic lane on which vehicles are intended to circulate, according to which:

A. the particle emission potential of a material of said traffic lane is calculated by implementing the method for determining the particle emission potential of a material according to claim 3, such that step i) of the method is carried out in the vicinity of the traffic lane;

B. at least one rule for watering the traffic lane and/or circulating vehicles on the traffic lane is defined by comparing the value of the particle emission potential of the material (PE) with at least a predetermined threshold.

5. A device (100) for determining the particle emission coefficient of a material (CE), including:

an enclosure (10);

an air compressor (20), configured so as to be able to inject an incoming air flow (23) into the enclosure (10);

a visibility meter (30) and a particle counter (40), configured so as to be able to measure respectively a visibility (POM) and a particle mass concentration (PM_max) in an air flow (25) exiting the enclosure (10);

a calculator (60) configured for the acquisition of the measurements made by the visibility meter (30) and the particle counter (40);

the calculator (60) being configured to:

i) calculate, from a series of measurements, as a function of time, of visibility and particle mass concentration that are made by the visibility meter (30) and the particle counter (40), a maximum particle mass concentration (PM_max) in the series of measurements and a time necessary for the visibility to become equal to a visibility before the particles become airborne, called total particle ejection time (D_Ej) in light of the series of measurements;

ii) calculate, from the values of maximum particle mass concentration (PM_max) and of total particle ejection time (D_Ej) for each series among a plurality of series of measurements of visibility and particle density, normalized values (PM_max_norm, D_Ej_norm) of the maximum particle mass concentrations and of the particle ejection times by dividing said values (PM_max, D_Ej) of maximum particle concentration and of particle ejection time that are measured respectively by the maximum value of maximum particle mass concentration and the maximum value of particle ejection time, the maximum value of maximum particle concentration being the largest value of maximum particle concentration and the maximum value of total particle ejection time being the largest value of total particle ejection time, for all the series of measurement of said plurality of series of measurements;

iii) calculate, from the normalized values (PM_max_norm, D_Ej_norm) of maximum particle mass concentration and of particle ejection time, a slope of a trend-line (D) representative of the function providing the maximum particle mass concentration (PM_max) as a function of the particle ejection time (D_Ej);

iv) calculate the particle emission coefficient of the material (CE) as being equal to a value of a monotonic function of the slope of the trend-line (D).

6. The device (100) for determining the particle emission coefficient of a material (CE) according to claim 5, whose calculator (60) is further configured to calculate the particle emission coefficient (CE) by the formula CE = A x tan (Θ), where Θ is an angle between the trend-line and the abscissa axis, and A is a fixed coefficient.

7. A device (100) for determining the particle emission potential of a material (PE), consisting of a device (100) for determining the particle emission coefficient of a material according to claim 5 or 6 further comprising an apparatus for measuring (50) the air humidity rate configured so as to be able to measure an air humidity rate (RH) in the vicinity of the enclosure; and whose calculator (60) is further configured to calculate the particle emission potential (PE) as a function of a ratio between the particle emission coefficient of the material (CE) and the relative humidity rate (HR).

FIG.1

FIG.2

FIG.3

FIG.4

FIG.5

```
┌─────────────────────────────────────────┐
│ a │  Prélèvement de fines                │
└─────────────────────────────────────────┘

┌─────────────────────────────────────────────┐
│ b                                             │
│  ┌──────────────────────────────────────┐   │
│  │ b1 │ Mise en place d'une masse de     │   │
│  │      fines dans l'enceinte            │   │
│  └──────────────────────────────────────┘   │
│                                               │
│  ┌──────────────────────────────────────┐   │
│  │ b2 │ Injection d'air, envol et        │   │
│  │      éjection des particules          │   │
│  └──────────────────────────────────────┘   │
│                                               │
│  ┌──────────────────────────────────────┐   │
│  │ b3 │ Mesure de la concentration       │   │
│  │      maximale de particules PM_max    │   │
│  │      et de durée d'éjection D_Ej      │   │
│  └──────────────────────────────────────┘   │
└─────────────────────────────────────────────┘

┌─────────────────────────────────────────┐
│ c │ Calcul des valeurs normalisées de    │
│     concentrations maximales et de durées│
│     d'éjection                           │
└─────────────────────────────────────────┘

┌─────────────────────────────────────────┐
│ d │ Calcul de la pente de la droite de   │
│     tendance D                           │
└─────────────────────────────────────────┘

┌─────────────────────────────────────────┐
│ e │ Calcul du coefficient d'émission de  │
│     particules PE du matériau            │
└─────────────────────────────────────────┘
```

# FIG.6

**A**

**i** Mesure du taux d'humidité relative HR

Coefficient d'émissions de particules du matériau

**ii** Calcul du potentiel d'émissions de particules du matériau

**B** Définition d'une règle d'arrosage et/ou de circulation sur la voie de circulation

# FIG.7

**EP 3 807 617 B1**

## RÉFÉRENCES CITÉES DANS LA DESCRIPTION

**Documents brevets cités dans la description**

- WO 2017103402 A1